# FASCICULE DE BREVET EUROPEEN

(11) **EP 1 385 786 B1**
(45) Date de publication et mention de la délivrance du brevet: **06.01.2010**
(21) Numéro de dépôt: 02730324.7
(22) Date de dépôt: 28.03.2002
(51) Int. Cl.: C01F 7/44, C01F 7/02, B01J 21/04, B01J 20/08

(54) **ADSORBANTS CONTENANT DES AGGLOMERES D'ALUMINE ET LEURS PROCEDES DE PREPARATION**
ABSORPTIONSMITTEL ENTHALTEND ALUMINIUMOXIDPELLETS UND VERFAHREN ZU IHRER HERSTELLUNG
ABSORBENT CONTAINING ALUMINA PELLETS AND METHODS FOR PREPARING SAME

(30) Priorité: 10.04.2001 FR 0104897
(43) Date de publication de la demande: 04.02.2004
(73) Titulaire: AXENS, 92500 Rueil Malmaison (FR)
(72) Inventeur: LE LOARER, Jean-Luc, F-30340 Salindres (FR); NEDEZ, Christophe, F-30340 Salindres (FR)
(74) Mandataire: Schmitt, Nicolas A.J.
(86) Numéro de dépôt international: PCT/FR2002/001096
(87) Numéro de publication internationale: WO 2002/083563

(56) Documents cités:
- EP-A- 0 656 413
- EP-A- 0 691 210
- EP-A- 0 849 223
- DE-A- 19 836 821
- DE-A- 19 843 241
- DE-C- 3 823 895
- FR-A- 2 764 208
- US-A- 5 055 443

## Description

L'invention concerne le domaine des agglomérés d'alumine, utilisables comme adsorbants. Plus précisément elle concerne un matériau adsorbant constitué par de nouveaux agglomérés d'alumine présentant des caractéristiques physiques spécifiques, en particulier du point de vue de leur porosité, leur conférant des propriétés particulièrement avantageuses. Elle concerne également un procédé d'obtention de tels agglomérés utilisés en tant qu'adsorbant.

Ces agglomérés peuvent, notamment, être utilisés dans l'industrie pétrolière ou pétrochimique. Après l'élimination des métaux contenus dans les pétroles, on procède habituellement à une réduction de la teneur en soufre des pétroles par passage sur un catalyseur déposé sur un support. L'efficacité de l'opération dépend de nombreux facteurs. La porosité du support, qui conditionne la surface de catalyseur offerte au pétrole à désulfurer, est l'un d'entre eux. Si une porosité élevée est souvent recherchée, elle n'a pas forcément intérêt à être aussi élevée que possible. Il est également important que le catalyseur et son support soient bien adaptés l'un à l'autre, et aussi que le support ait une résistance mécanique suffisante pour lui conférer une bonne tenue dans le temps, compte tenu de ses conditions d'utilisation. Ces propriétés peuvent tendre à se dégrader exagérément pour les porosités les plus élevées. Par ailleurs, il est important de, rechercher le meilleur compromis enter les propriétés du matériau utilisé et son prix de revient.

De même, les propriétés adsorbantes des alumines ne sont pas liées de façon univoque à la porosité globale du matériau: un nombre maximal de pores de petite taille n'est pas forcément un gage d'efficacité du matériau.

Le but de l'invention est de procurer aux utilisateurs d'agglomérés d'alumine comme adsorbants, des matériaux présentant une efficacité optimisée.

A cet effet, l'invention a pour objet un matériau adsorbant constitué d'agglomérés d'alumine, du type obtenu par déshydratation d'un hydroxyde ou oxyhydroxyde d'aluminium, agglomération de l'alumine ainsi obtenue, traitement hydrothermal des agglomérés et calcination, lesdits agglomérés étant caractérisés en ce qu'ils se présentent sous forme de billes et
- ils présentent une surface spécifique comprise entre 90 et 220 m²/g, préférentiellement entre 100 et 200 m²/g ;
- ils présentent un V_{37Å} compris entre 40 et 65 ml/g, préférentiellement entre 45 et 60 ml/100g ;
- ils présentent un V_{200Å} supérieur ou égal à. 12 ml/100g, préférentiellement supérieur ou égal à 15 ml/100g, très préférentiellement supérieur ou égal à 18 ml100g;et
- ils présentent un rapport surface spécifique / V_{200Å} inférieur ou égal à 10, préférentiellement inférieur ou égal à 8,5, très préférentiellement inférieur ou égal à 7.

Ils peuvent présenter un rapport V_{100Å} / V_{200Å} inférieur ou égal à 2,6, préférentiellement inférieur ou égal à 2,3, très préférentiellement inférieur ou égal à 2.

Ils peuvent présenter un diamètre médian des pores supérieur ou égal à 12 nm, préférentiellement supérieur ou égal à 14 nm et un rapport diamètre médian des pores (en nm) / V_{200Å} (en ml/100g) inférieur ou égal à 1,1, préférentiellement inférieur ou égal à 1,0, très préférentiellement inférieur ou égal à 0,9.

Ils peuvent présenter un V_{1µm} inférieur ou égal à 10 ml/100g, préférentiellement inférieur ou égal à 8,5 ml/100g, très préférentiellement inférieur ou égal à 7ml/100g.

Ils peuvent présenter un V_{0,1µm} supérieur ou égal à 8 ml/100g, préférentiellement supérieur ou égal à 10 ml/100g.

Selon un exemple particulier de réalisation, ils présentent une surface spécifique de 90 à 220 m²/g, un V_{37Å} de 45 à 60 ml/100g. un V_{200Å} supérieur ou égal à 18 ml/100g, un rapport surface spécifique / V_{200Å} inférieur ou égal à 8,5, un rapport V_{100Å}/V_{200Å} inférieur ou égal à 2, un diamètre médian des pores supérieur ou égal à 12 nm, un rapport diamètre médian des pores / V_{200Å} inférieur ou égal à 0,9, et un V_{1µm} inférieur ou égal à 7 ml/100g.

Ces agglomérés sont préférentiellement obtenus à partir d'hydrargitlite.

Ils se présentent sous forme de billes.

Selon L'invention, le matériau adsorbant, est notamment employé pour l'industrie pétrolière ou pétrochimique.

L'invention a également pour objet un procédé de préparation d'agglomérés d'alumine du type précédent, selon lequel :
- on déshydrate brutalement par flashage un hydroxyde ou un oxyhydroxyde d'aluminium, pour obtenir une poudre d'alumine ;
- on procède à une granulation de ladite poudre d'alumine, mise au contact d'une pulvérisation d'eau et éventuellement additivée par des porogènes, dans un drageoir ou un tambour tournant, éventuellement suivie d'un tamisage, de manière à obtenir des billes de diamètre compris entre 0,8 et 10 mm, préférentiellement entre 1 et 5mm ;
- on procède à une calcination desdites billes de manière à leur conférer une densité de remplissage tassée de 300 à 1200 kg/m³, préférentiellement de 600 à 1100kg/m³, et une surface spécifique supérieure à 60 m²/g, préférentiellement comprise entre 80 et 420m²/g ;
- on procède à un traitement hydrothermal desdites billes par imprégnation avec de l'eau ou une solution aqueuse d'un acide ou d'un mélange d'acides minéraux ou organiques, puis traitement dans un autoclave à une température supérieure à 80°C ;
- et on procède à une calcination desdites billes de manière à leur conférer une surface spécifique de 90 à 220 m²/g.

Ladite solution aqueuse d'imprégnation utilisée lors du traitement hydrothermal peut être additivée par un ou des composés susceptibles de libérer des anions capables de se combiner avec les ions aluminium.

Ledit traitement hydrothermal peut être effectué à une température comprise entre 80 et 250°C, préférentiellement entre 150 et 250°C pendant une durée comprise entre 20 minutes et 36 heures, préférentiellement entre 40 minutes et 12 heures.

La calcination suivant le traitement hydrothermal peut être effectuée à une température de 400 à 1300°C, préférentiellement de 500 à 1300°C, pendant une durée inférieure à 6 heures.

L'hydroxyde d'aluminium ou le matériau à base d'alumine est préférentiellement de l'hydrargillite.

Comme on l'aura compris, l'invention consiste à procurer aux agglomérés d'alumine des caractéristiques de porosité précises, avec une répartition des pores de différents diamètres répondant à des critères stricts. On réalise ainsi un bon compromis entre des exigences parfois contradictoires, à savoir :
- une porosité procurant une grande surface spécifique, offrant donc de grandes possibilités de réaction avec le milieu qui vient au contact des agglomérés ;
- une porosité cependant pas trop élevée, notamment pour ne pas compromettre exagérément la résistance mécanique des agglomérés lors des utilisations où cette résistance mécanique est exigée ; le matériau ainsi obtenu sera souvent d'un bon compromis performance/coût ;
- des pores pas trop fins en moyenne, pour assurer une bonne pénétration du milieu qui vient au contact de l'aggloméré, donc une bonne exploitation de la surface réactive disponible.

L'invention sera mieux comprise à la lecture de la description qui suit, donnée en référence aux figures annexées :

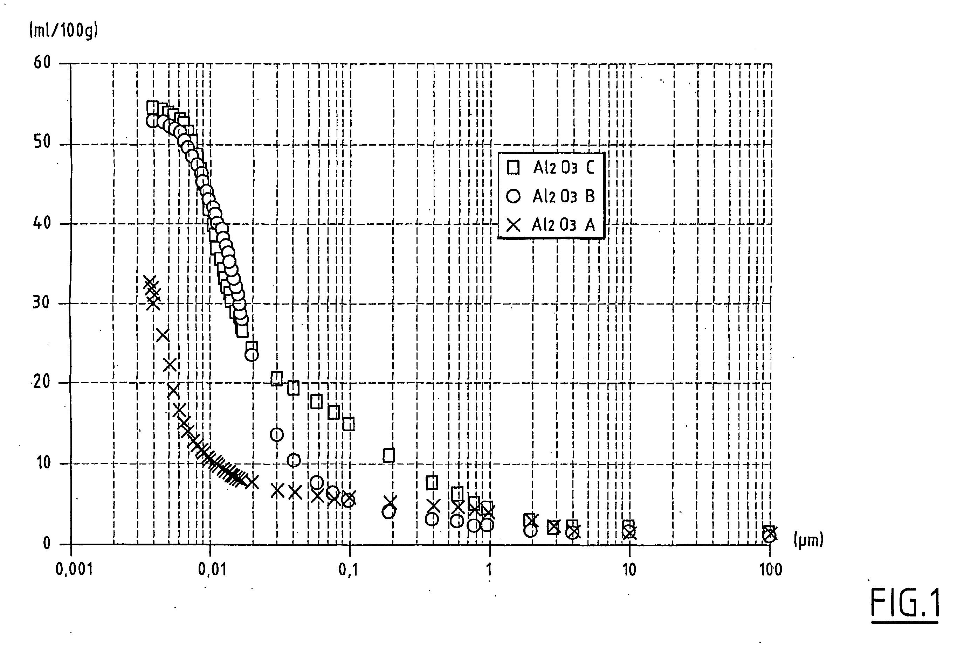

- la figure 1 qui représente la distribution poreuse d'une alumine A obtenue en tant que produit intermédiaire dans un exemple de mise en oeuvre du procédé selon l'invention, et la distribution poreuse de deux alumines finales B et C selon l'invention, obtenues à partir de cette alumine A ; le diamètre des pores (en µm) est donné en abscisses et le volume poreux cumulé (en ml/100g) est donné en ordonnées ;

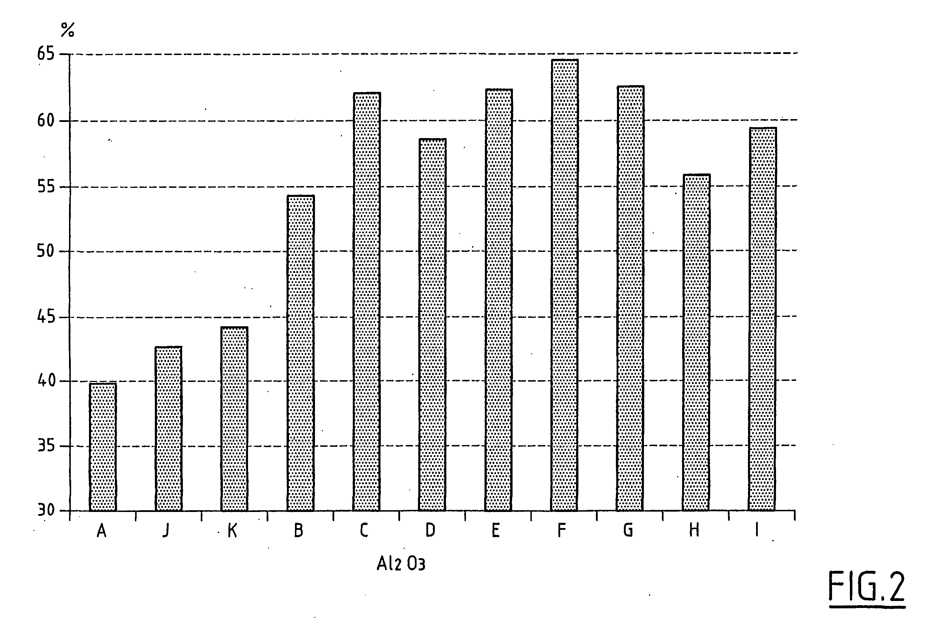

- la figure 2 qui montre les taux d'adsorption (en %) d'une solution d'acétylacétonate de vanadium dans du toluène par différents agglomérés d'alumine, représentatifs de l'invention et de l'art antérieur.

Dans la suite de la description, les différentes grandeurs auxquelles on se référera sont définies de la façon suivante.

La morphologie des agglomérés est définie par l'indication des volumes occupés par les pores d'un diamètre supérieur ou égal à une série de diamètres donnés, à savoir :
- le volume occupé par les pores de diamètre supérieur ou égal à 37Å (V_{37Å}) ;
- le volume occupé par les pores de diamètre supérieur ou égal à 100Å (V_{100Å}) ;
- le volume occupé par les pores de diamètre supérieur ou égal à 200Å (V_{200Å}) ;
- le volume occupé par les pores de diamètre supérieur ou égal à 0,1µm (V_{0,1µm});
- le volume occupé par les pores de diamètre supérieur ou égal à 1µm (V_{1µm}).

Ces volumes peuvent être mesurés, de manière classique, par la technique dite de « porosimétrie au mercure ».

A cet effet, l'échantillon d'alumine est placé dans une colonne, dans laquelle on introduit du mercure sous une pression P. Le mercure ne mouillant pas l'alumine, sa pénétration ou sa non-pénétration dans les pores de l'échantillon ayant un diamètre donné est fonction de la valeur de P. Les pores les plus fins nécessitent, pour être remplis, l'établissement d'une pression P plus élevée que pour le remplissage des pores plus grossiers. La mesure de la quantité de mercure pénétrant dans l'échantillon pour différentes valeurs de P permet de connaître le volume occupé par les pores de diamètre supérieur à des valeurs données de ce diamètre.

On a ainsi accès à la courbe définissant la répartition poreuse du matériau, telle que celles représentées sur la figure 1. A partir de cette courbe, on peut également calculer le diamètre médian (d_{médian}) des pores, à savoir le diamètre des pores correspondant sur la courbe à la moitié du volume poreux cumulé total estimé par le V_{37Å}.

La morphologie des agglomérés est aussi caractérisée, comme il est également classique, par l'indication de leur surface spécifique. Le rapport entre cette surface spécifique et le V_{200Å}, ainsi que les rapports V_{100Å/}V_{200Å} et d_{médiian}/V_{200Å} , sont également pris en compte.

Deux exemples non limitatifs d'obtention d'agglomérés d'alumine selon l'invention vont à présent être décrits.

On procède d'abord, comme dans les procédés précédemment connus, à un chauffage intense et rapide dit « flashage », conduisant à une déshydratation brutale, d'un hydroxyde d'aluminium (hydrargillite, gibbsite ou bayerite) ou d'un oxyhydroxyde d'aluminium (boehmite ou diaspore), à l'aide d'un courant de gaz chaud permettant d'éliminer et d'entraîner très rapidement l'eau évaporée. La température est de l'ordre de 400 à 1200°C, et le temps de contact du matériau à déshydrater avec les gaz est de l'ordre d'une fraction de seconde à 4 ou 5 secondes. On obtient ainsi de l'alumine sous forme de poudre. Comme composé de départ, on utilise préférentiellement de l'hydrargillite. L'expérience montre que ce composé est le plus favorable pour l'obtention d'un produit final ayant les propriétés recherchées. De plus, il est relativement bon marché.

Cette alumine est ensuite mise sous forme de billes par mise en contact avec une pulvérisation à base d'eau dans un drageoir (bol tournant autour d'un axe incliné). Des adjuvants, tels que des matériaux dits « porogènes », pourront être ajoutés simultanément ou successivement Les porogènes sont des matériaux qui disparaîtront lors des traitements thermiques ultérieurs en laissant des pores dans l'alumine. A cet effet, on peut employer notamment de la farine de bois, du charbon de bois, du soufre, des goudrons, des matières plastiques, etc. On règle les paramètres de fonctionnement du drageoir de telle manière que les billes en soient expulsées, sous l'effet de la force centrifuge, lorsqu'elles ont atteint un diamètre compris en général entre 0,8 et 10mm , de préférence entre 1 et 5mm. Au besoin, on réalise un tamisage des billes expulsées pour obtenir un spectre de diamètres plus restreint Au lieu d'un drageoir, on peut utiliser un tambour tournant. Après mûrissement et calcination de ces billes, on obtient une alumine A dite conventionnellement « alumine activée » qui, dans cet exemple, a une densité de remplissage tassée de 825 kg/m³ et une surface spécifique de 342 m²/g. Habituellement la densité de remplissage tassée sera comprise entre 300 et 1200 kg/m³, de préférence entre 600 et 1100 kg/m³. La surface spécifique sera supérieure à 60 m²/g, de préférence comprise entre 80 et 420 m²/g. Elle possède une distribution poreuse qui est reportée sur la figure 1.

Puis on effectue un traitement sur l'alumine A, dit « traitement hydrothermal ». Ce type de traitement, connu en lui-même dans ses généralités, consiste à imprégner les agglomérés d'alumine avec de l'eau ou une solution aqueuse d'un acide ou d'un mélange d'acides minéraux ou organiques, pouvant également renfermer des composés susceptibles de libérer des anions capables de se combiner avec les ions aluminium, puis à porter ces agglomérés, disposés à l'intérieur d'un autoclave, à une température supérieure à 80°C. A titre d'exemple, on citera, comme produits pouvant être ajoutés à l'occasion dudit traitement hydrothermal, l'acide nitrique, l'acide chlorhydrique, l'acide perchlorique, l'acide sulfurique, les acides faibles dont la solution a un pH inférieur à 4 comme l'acide acétique ou l'acide formique, mais encore les composés comprenant un ion nitrate (comme le nitrate d'aluminium), chlorure, sulfate, perchlorate, chloroacétate, trichloroacétate, bromoacétate, dibromoacétate, et les anions de formule générale R-COO⁻ comme les formiates et les acétates. Le document EP-A-0 387 109 expose un exemple non limitatif d'exécution d'un tel traitement Puis un dernier traitement thermique procure aux agglomérés leur surface spécifique définitive, Ce traitement thermique de calcination est effectué à haute température, de l'ordre par exemple de 500°C.

Selon un premier exemple d'un tel traitement hydrothermal, il est conduit à une température de 200°C durant 6h 30mn, dans un autoclave à panier rotatif, et la solution d'imprégnation est une solution aqueuse contenant 2,2% de nitrate d'aluminium et 12% d'acide formique, ces pourcentages étant calculés en masse par rapport à la masse d'alumine introduite. Puis le traitement thermique final consiste à porter les agglomérés à 500°C pendant 2 heures, et leur procure un surface spécifique de 153 m²/g. On obtient ainsi une alumine B, dont la distribution poreuse est reportée sur la figure 1.

Selon un deuxième exemple de traitement hydrothermal, l'alumine A est traitée à une température de 220°C durant 6h 15mn dans un autoclave à panier rotatif, et la solution d'imprégnation est une solution aqueuse contenant 6% de nitrate d'aluminium et 0,2% d'acide oxalique par rapport à la masse d'alumine introduite. Le traitement thermique final est effectué à 500°C pendant 2 heures, et procure aux agglomérés une surface spécifique de 156m²/g. On obtient ainsi une alumine C, dont la distribution poreuse est reportée sur la figure 1.

Ledit traitement hydrothermal peut être effectué à une température comprise entre 80 à 250°C, de préférence entre 150 et 250°C, pendant une durée comprise habituellement entre 20 minutes et 36 heures, de préférence incluse entre 40 minutes et 12 heures.

Le tableau 1 montre les caractéristiques de plusieurs exemples d'agglomérés d'alumine, obtenus par le procédé précédent sous forme de billes. Les alumines B et C y figurent, ainsi que d'autres alumines D à 1 selon l'invention, obtenues en faisant varier les conditions de leurs mise en forme et du traitement hydrothermal. Dans tous les cas, on leur a conféré une granulométrie comprise entre 1,4 et 2,8mm, pour que l'ensemble des échantillons puissent être comparés, du point de vue de leurs performances, en éliminant l'influence de leur granulométrie, On fait également figurer dans le tableau 1 les caractéristiques de l'alumine A de départ, ainsi que de deux alumines J et K de référence connues, non conformes à l'invention, qui ont été obtenues par calcination de l'alumine A donc sans traitement hydrothermal. Ces alumines A, J et K respectent, elles aussi, les conditions de granulométrie précédentes.

Dans ce tableau 1, les surfaces spécifiques sont données en m²/g, les volumes en ml/100g et les diamètres médians des pores en nm.

**Tableau 1. Caractéristiques des alumines décrites**

| | Alumine | surface spécifique | V_{97 Å} | V_{200 Å} | surface spécifique /V_{200Å} | V_{100Å}/V_{200Å} | d_{médian} | d_{médian}/V_{200Å} | V_{0,1µm} | V_{1µm} |
|---|---|---|---|---|---|---|---|---|---|---|
| Départ | A | 342 | 32,7 | 7,5 | 45,6 | 1,36 | 6.0 | 0,80 | 5,6 | 4,0 |
| Référence | J | 168 | 48.2 | 9.3 | 18,1 | 2,83 | 10,4 | 1,12 | 6,1 | 4,2 |
| | K | 126 | 50,8 | 12.4 | 10,2 | 3.19 | 14,2 | 1,15 | 6.7 | 4,5 |
| Invention | B | 153 | 53,D | 23,2 | 6,6 | 1.68 | 18,3 | 0,79 | 5.4 | 2,4 |
| | C | 156 | 54,7 | 24,1 | 6,5 | 1,73 | 17,0 | 0,71 | 15,0 | 4.5 |
| | D | 120 | 58.9 | 27.4 | 4.4 | 1.84 | 19.6 | 0,72 | 5,1 | 2,1 |
| | E | 101 | 58,3 | 32,7 | 3,1 | 1.68 | 21.7 | 0,66 | 5.7 | 2,6 |
| | F | 122 | 58,9 | 27,1 | 4,5 | 1,86 | 17,7 | 0,66 | 15,7 | 5.5 |
| | G | 96 | 58,7 | 29.5 | 3,3 | 1.87 | 20,1 | 0,68 | 16,8 | 5,5 |
| | H | 168 | 52,9 | 2,5,4 | 8,8 | 1.50 | 16.2 | 0,64 | 5,8 | 2,1 |
| | I | 163 | 52,6 | 20,4 | 8,0 | 1,86 | 13,7 | 0,87 | 11,7 | 27 |

Comme le montre le tableau 1, les alumines selon l'invention présentent des caractéristiques relatives de surface spécifique et de profil de porosité particulières. On remarque que, par rapport aux alumines de référence selon l'art antérieur :
- les alumines de l'invention ont, dans ces exemples B-I, un V_{200Å} élevé, supérieur à la limite minimale très préférentielle de 18ml/g exigée par l'invention ;
- les alumines de l'invention ont un rapport surface spécifique/V_{200Å} inférieur à celui des alumines de référence (caractéristique obligatoire de l'invention), et un rapport V_{100Å}/ V_{200Å} inférieur à celui des alumines de référence (caractéristique préférée de l'invention); dans les exemples B-I, ces deux grandeurs sont inférieures respectivement à 7 et 2 ;
- les alumines de l'invention ont un diamètre médian des pores relativement élevé (supérieur à 12nm dans les exemples B-I), mais qui peut être du même ordre de grandeur que celui de l'alumine K de référence ; en revanche, le rapport d_{médian} (en nm) / V_{200Å} (en ml/100g) des alumines de l'invention est franchement inférieur à celui des alumines de référence (inférieur à 0,9 dans les exemples B-I) ; cette caractéristique n'est cependant qu'une caractéristique préférée de l'invention ;
- les alumines de l'invention ont des V_{0,1µm} et V_{1µm} qui ne se distinguent pas forcément de ceux des alumines de référence ; les exemples B-I ont cependant un V_{1µm} inférieur à la limite supérieure préférentielle de 7ml/100g.

Le tableau 1 et la figure 1 montrent, par ailleurs, que les alumines B et C selon l'invention se distinguent l'une de l'autre en ce que dans l'alumine C, les pores de diamètre supérieur à 200Å (et notamment entre 200Å et 1µm) représentent un volume sensiblement plus important que dans l'alumine B. Par rapport à l'alumine A de départ, le traitement hydrothermal et le traitement thermique final ont, pour les deux alumines B et C, conduit à une augmentation sensible du volume représenté par les pores de diamètre inférieur à 500Å, de même qu'à une diminution de la surface spécifique du matériau.

Les profils de porosité exigés par l'invention sont adaptés à l'utilisation des agglomérés d'alumine comme adsorbant, notamment dans l'industrie pétrolière ou pétrochimique.

A l'appui de cette dernière affirmation, la figure 2 compare les propriétés adsorbantes des alumines A à K du tableau 1. Ces alumines ont toutes été prétraitées à 300°C durant 2 heures sous courant d'azote sec, afin d'éliminer toute trace d'humidité emmagasinée suite à leur stockage. Elles ont alors, sans retour à l'atmosphère ambiante, été introduites, à raison de 500 mg, chacune dans un bécher différent contenant de l'acétylacétonate de vanadium (VO(acac)₂) présent dans 200 ml de toluène à la concentration de 700 ppm (en poids par rapport au volume de toluène). Après agitation, à température ambiante, durant 60 heures, le taux d'adsorption du complexe organométallique du vanadium par chaque alumine est mesuré par évolution de la concentration de la solution déterminée par spectroscopie UV-visible. Les résultats obtenus sont représentés sur la figure 2.

On voit que les taux d'adsorption de l'acétylacétonate de vanadium par les alumines J et K de référence (43 et 44%) ne sont pas très supérieurs à celui obtenu avec l'alumine A qui a servi de produit intermédiaire pour la préparation des autres alumines (40%).

En revanche l'alumine B selon l'invention permet d'obtenir un taux d'adsorption de 54% et l'alumine C de 62%. De manière générale, les alumines B à I selon l'invention ont des taux d'adsorption de l'ordre de 54 à 65%, soit 10 à 21% environ au-dessus des taux d'adsorption obtenus avec les alumines de référence J et K.

Selon l'invention, le V_{37Å} des agglomérés d'alumine doit être compris entre 40 et 65 ml/100g. En dessous de 40 ml/100g, les performances des agglomérés sont insuffisantes. Au-dessus de 65 ml/100g, la résistance mécanique n'est plus suffisante pour les applications préférentiellement envisagées. Préférentiellement, le V_{37Å} est compris entre 45 et 60 ml/100g, ce qui est le cas des alumines B-I du tableau 1.

La comparaison entre les alumines J et K d'une part et B d'autre part met en valeur l'influence essentielle qu'exercent le V_{200Å} et, surtout, le rapport surface spécifique / V_{200Å}, sur les propriétés adsorbantes du matériau.

Les procédés de préparation et de conditionnement des agglomérés d'alumine selon l'invention ont été décrits précisément dans le cas de l'obtention de billes.

## Revendications

1. Matériau adsorbant constitué d'agglomérés d'alumine du type obtenu par déshydratation d'un hydroxyde ou oxyhydroxyde d'aluminium, agglomération de l'alumine ainsi obtenue, traitement hydrothermal des agglomérés et calcination, lesdits agglomérés étant **caractérisés en ce qu'**ils se présentent sous forme de billes et présentent :
- une surface spécifique comprise entre 90 et 220 m²/g
- un V_{37Å} compris entre 40 et 65 ml/100g ;
- un V_{200Å} supérieur ou égal à 12 ml/100g ;
- un rapport surface spécifique N_{200Å} inférieur ou égal à 10.

2. Matériau adsorbant selon la revendication 1 tel que lesdits agglomérés d'alumine présentent un rapport V_{100Å}/V_{200Å} inférieur ou égal à 2,6.

3. Matériau adsorbant selon la revendication 1 ou la revendication 2 tel que lesdits agglomérés d'alumine présentent un diamètre médian des pores supérieur ou égal à 12 nm et un rapport diamètre médian des pores (en nm) / V_{200Å} (en ml/100g) inférieur ou égal à 1,1.

4. Matériau adsorbant selon l'une des revendications 1 à 3 tel que lesdits agglomérés d'alumine présentent un V_{1µm} inférieur ou égal à 10 ml/100g.

5. Matériau adsorbant selon l'une des revendications 1 à 4 tel que lesdits agglomérés d'alumine présentent un V_{0.1µm} supérieur ou égal à 8 ml/100 g.

6. Matériau adsorbant selon l'une des revendications 1 à 4 tel que lesdits agglomérés d'alumine présentent une surface spécifique de 90 à 220 m²/g, un V_{37Å} compris entre 45 et 60 ml/100g, un V_{200Å} supérieur ou égal à 18 ml/100g, un rapport surface spécifique /V_{200Å} inférieur ou égal à 8,5, un rapport V_{100Å}V_{200Å} inférieur ou égal à 2, un diamètre médian des pores supérieur ou égal à 12 nm, un rapport diamètre médian des pores / V_{200Å} inférieur ou égal à 0,9 et un V_{1µm} inférieur ou égal à 7 ml/100g.

7. Matériau adsorbant selon l'une des revendications 1 à 6 tel que lesdits agglomérés d'alumine ont été obtenus à partir d'hydrargillite.

8. Matériau adsorbant selon l'une des revendications 1 à 7 tel qu'il est employé pour l'industrie pétrolière ou pétrochimique.

9. Procédé de préparation d'un matériau adsorbant selon l'une des revendications 1 à 8 tel que lesdits agglomérés d'alumine sont préparés selon un procédé dans lequel :
- on déshydrate brutalement par flashage un hydroxyde ou un oxyhydroxyde d'aluminium, pour obtenir une poudre d'alumine ;
- on procède à une granulation de ladite poudre d'alumine, mise au contact d'une pulvérisation d'eau et éventuellement additivée par des porogènes, dans un drageoir ou un tambour tournant, éventuellement suivie d'un tamisage, de manière à obtenir des billes de diamètre compris entre 0,8 et 10 mm ;
- on procède à une calcination desdites billes de manière à leur conférer une densité de remplissage tassée de 300 à 1200 kg/m³ et une surface spécifique supérieure à 60 m²/g ;
- on procède à un traitement hydrothermal desdites billes par imprégnation avec de l'eau ou une solution aqueuse d'un acide ou d'un mélange d'acides minéraux ou organiques, puis traitement dans un autoclave à une température supérieure à 80 °C ;
- et on procède à une calcination desdites billes de manière à leur conférer une surface spécifique de 90 à 220m²/g.

10. Procédé selon la revendication 9 tel que ladite solution aqueuse d'imprégnation utilisée lors du traitement hydrothermal est additivée par un ou des composés susceptibles de libérer des anions capables de se combiner avec les ions aluminium.

11. Procédé de préparation selon la revendication 9 ou la revendication 10 tel que ledit traitement hydrothermal est effectué à une température comprise entre 80 et 250°C pendant une durée comprise entre 20 minutes et 36 heures.

12. Procédé de préparation selon l'une des revendications 9 à 11 tel que la calcination suivant le traitement hydrothermal est effectué à une température de 400 à 1300°C pendant une durée inférieure à 6 heures.

13. Procédé selon l'une-des revendications 9 à 12 tel que l'hydroxyde d'aluminium est de l'hydrargillite.

## Claims

1. An adsorbent material constituted by alumina agglomerates of the type obtained by dehydrating an aluminum hydroxide or oxyhydroxide, agglomerating the alumina obtained, hydrothermally treating the agglomerates and calcining, said agglomerates being **characterized in that** they are in the form of beads and wherein :
- they have a specific surface area in the range 90 m²/g to 220 m²/g;
- they have a V_{37Å} in the range 40 ml/100 g to 65 ml/100 g;
- they have a V_{200Å} in the range of 12 ml/100 g or more ; and
- they have a specific surface area /V_{200Å} ratio of 10 or less.

2. An adsorbent material according to claim 1 wherein said alumina agglomerates have a V_{100Å} / V_{200Å} ratio of 2.6 or less.

3. An adsorbent material according to claim 1 or claim 2 wherein said alumina agglomerates have a median pore diameter of 12 nm (in ml/100 g) or more, and a median pore diameter (in nm)/V_{200Å} ratio of 1.1 or less.

4. An adsorbent material according to one of claims 1 à 3 wherein said alumina agglomerates have a V_{1µm} of 10 ml/100 g or less.

5. An adsorbent material according to one of claims 1 à 4 wherein said alumina agglomerates have a V_{0.1µm} of 8 ml/100 or more.

6. An adsorbent material according to one of claims 1 à 4 wherein said alumina agglomerates have a specific surface area in the range 90 m²/g to 220 m²/g, a V_{37Å} in the range 45 ml/100 g to 60 ml/100 g, a V_{200Å} in the range of 18 ml/100 g or more, a specific surface area /V_{200Å} ratio of 8.5 or less, a V_{100Å} / V_{200Å} ratio of 2 or less, a median pore diamter of 12 nm or more, a median pore diameter (in nm)/V_{200Å} ratio of 0.9 or less and a V_{1µm} of 7 ml/100 g or less.

7. An adsorbent material according to one of claims 1 à 6 wherein said alumina agglomerates are obtained from hydrargillite.

8. An adsorbent material according to one of claims 1 à 7 wherein it is used for the oil or petrochemicals industry.

9. A process for preparing an adsorbent material according to one of claims 1 to 8 in which said alumina agglomerates are prepared according a process wherein :
- an aluminium hydroxide or oxyhydoxide is rapidly dehydrated by flashing to obtain an alumina powder;
- said alumina powder is granulated, brought into contact with a water spray and optionally supplemented with pore-forrning agents, in a bowl granulator or rotary drum, optionally followed by sieving, to obtain beads with a diameter in the range 0.8 mm to mm ;
- said beads are calcined to provide them with a compact packing density of 300 kg/m³ to 1200 kg/m³, and a specific surface area of 60 m²/g;
- said beads are treated hydrothermally by impregnating wit water or an aqueous solution of an acid or a mixture of mineral or organic acids, then treating in an autoclave at a temperature of more than 80°C;
- and said beads are calcined to endow then with a specific surface area of 90 m²/g to 220 m²/g_{.}

10. A process according to claim 9 wherein said aqueous impregnation solution used during the hydrothermal treatment is supplemented with one or more compounds that can liberate anions that are capable of combining with the aluminum ions.

11. A process according to claim 9 or claim 10 wherein said hydrothermal treatment is carried out at a temperature in the range 80 to 250°C, for a period in the range 20 min to 36 h.

12. A process according to one of claims 9 to 11 wherein the calcining step following the hydrothermal treatment is carried out at a temperature of 400 to 1300°C, for a period of less than 6 h.

13. A process according to one of claims 9 to 12 wherein the aluminum hydroxide is hydrargillite.

## Patentansprüche

1. Adsorptionsmaterial, bestehend aus Aluminiumoxid-Agglomeraten des Typs, der durch Dehydratisierung eines Aluminiumhydroxids oder Aluminiumoxyhydroxids, Agglomerierung des so gewonnenen Aluminiumoxids, hydrothermische Behandlung der Agglomerate und Kalzinierung gewonnen wird, wobei die Agglomerate **dadurch gekennzeichnet sind, dass** sie in Form von Kugeln vorliegen und aufweisen:
- eine spezifische Oberfläche, die zwischen 90 und 220 m²/g liegt;
- ein V_{37Å}, das zwischen 40 und 65 ml/100g liegt;
- ein V_{200Å}, das größer oder gleich 12 ml/100g ist;
- ein Verhältnis spezifische Oberfläche /V_{200Å}, das kleiner oder gleich 10 ist.

2. Adsorptionsmaterial nach Anspruch 1, wobei die Aluminiumoxid-Agglomerate ein Verhältnis V_{100Å}/V_{200Å} aufweisen, das kleiner oder gleich 2,6 ist.

3. Adsorptionsmaterial nach Anspruch 1 oder Anspruch 2, wobei die Aluminiumoxid-Agglomerate einen Mediandurchmesser der Poren, der größer oder gleich 12 nm ist, und ein Verhältnis Mediandurchmesser der Poren (in nm) / V_{200Å} (in ml/100g), das kleiner oder gleich 1,1 ist, aufweisen.

4. Adsorptionsmaterial nach einem der Ansprüche 1 bis 3, wobei die Aluminiumoxid-Agglomerate ein V_{1µm} aufweisen, das kleiner oder gleich 10 ml/100g ist.

5. Adsorptionsmaterial nach einem der Ansprüche 1 bis 4, wobei die Aluminiumoxid-Agglomerate ein V_{0,1µm} aufweisen, das größer oder gleich 8 ml/100g ist.

6. Adsorptionsmaterial nach einem der Ansprüche 1 bis 4, wobei die Aluminiumoxid-Agglomerate eine spezifische Oberfläche zwischen 90 und 220 m²/g, ein V_{37Å}, das zwischen 45 und 60 ml/100g liegt, ein V_{200A}, das größer oder gleich 18 ml/100g ist, ein Verhältnis spezifische Oberfläche /V_{200Å}, das kleiner oder gleich 8,5 ist, ein Verhältnis V_{100Å}/V_{200Å}, das kleiner oder gleich 2 ist, einen Mediandurchmesser der Poren, der größer oder gleich 12 nm ist, ein Verhältnis Mediandurchmesser der Poren / V_{200Å}, das kleiner oder gleich 0,9 ist, und ein V_{1µm}, das kleiner oder gleich 7 ml/100g ist, aufweisen.

7. Adsorptionsmaterial nach einem der Ansprüche 1 bis 6, wobei die Aluminiumoxid-Agglomerate ausgehend von Hydrargillit hergestellt wurden.

8. Adsorptionsmaterial nach einem der Ansprüche 1 bis 7, wobei es für die Erdölindustrie oder erdölchemische Industrie verwendet wird.

9. Verfahren zur Herstellung eines Adsorptionsmaterials nach einem der Ansprüche 1 bis 8, wobei die Aluminiumoxid-Agglomerate nach einem Verfahren hergestellt werden, wobei:
- ein Aluminiumhydroxid oder ein Aluminiumoxyhydroxid durch Flashverdampfung schlagartig dehydratisiert wird, um ein Aluminiumoxidpulver zu gewinnen;
- eine Granulierung des Aluminiumoxidpulvers, das mit Sprühwasser in Kontakt gebracht wurde und dem möglicherweise Porogene zugegeben wurden, in einer Dragiervorrichtung oder einer rotierenden Trommel durchgeführt wird, möglicherweise gefolgt von einer Siebung, so dass Kugeln mit einem Durchmesser erhalten werden, der zwischen 0,8 und 10 mm liegt;
- eine Kalzinierung der Kugeln durchgeführt wird, so dass ihnen eine gepresste Fülldichte von 300 bis 1200 kg/m³ und eine spezifische Oberfläche von mehr als 60 m²/g verliehen werden;
- eine hydrothermische Behandlung der Kugeln durch Tränkung mit Wasser oder einer wässrigen Lösung einer Mineralsäure oder organischen Säure oder eines Gemisches solcher Säuren durchgeführt wird, und anschließend eine Behandlung in einem Autoklaven bei einer Temperatur von mehr als 80 °C;
- und eine Kalzinierung der Kugeln durchgeführt wird, so dass ihnen eine spezifische Oberfläche zwischen 90 und 220 m²/g verliehen wird.

10. Herstellungsverfahren nach Anspruch 9, wobei der wässrigen Tränkungslösung, die bei der hydrothermischen Behandlung verwendet wird, eine oder mehrere Verbindungen zugegeben werden, die Anionen freisetzen können, welche in der Lage sind, sich mit den Aluminiumionen zu verbinden.

11. Herstellungsverfahren nach Anspruch 9 oder Anspruch 10, wobei die hydrothermische Behandlung bei einer Temperatur, die zwischen 80 und 250 °C liegt, während einer Dauer, die zwischen 20 Minuten und 36 Stunden liegt, durchgeführt wird.

12. Herstellungsverfahren nach einem der Ansprüche 9 bis 11, wobei die Kalzinierung, die sich an die hydrothermische Behandlung anschließt, bei einer Temperatur von 400 bis 1300 °C während einer Dauer von weniger als 6 Stunden durchgeführt wird.

13. Herstellungsverfahren nach einem der Ansprüche 9 bis 12, wobei das Aluminiumhydroxid Hydrargillit ist.
